(19) Europäisches Patentamt / European Patent Office / Office européen des brevets

(11) **EP 4 130 798 B1**

(12) **EUROPEAN PATENT SPECIFICATION**

(45) Date of publication and mention
of the grant of the patent:
**10.06.2026 Bulletin 2026/24**

(21) Application number: **20930782.6**

(22) Date of filing: **15.04.2020**

(51) International Patent Classification (IPC):
*G01S 17/89* (2020.01)   *G01S 7/48* (2006.01)
*G01S 7/481* (2006.01)   *G01S 7/486* (2020.01)
*G01S 7/487* (2006.01)   *G01S 7/497* (2006.01)
*G01S 17/931* (2020.01)   *G06F 18/2415* (2023.01)

(52) Cooperative Patent Classification (CPC):
**G01S 17/931; G01S 7/4802; G01S 17/89;**
**G06V 10/30;** G06V 20/58; G06V 2201/12

(86) International application number:
**PCT/CN2020/084818**

(87) International publication number:
**WO 2021/207954 (21.10.2021 Gazette 2021/42)**

(54) **TARGET IDENTIFICATION METHOD AND DEVICE**

ZIELIDENTIFIKATIONSVERFAHREN UND -VORRICHTUNG

PROCÉDÉ ET DISPOSITIF D'IDENTIFICATION DE CIBLE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**08.02.2023 Bulletin 2023/06**

(73) Proprietor: **Yinwang Intelligent Technologies Co.,**
**Ltd.**
**Shenzhen, Guangdong 518110 (CN)**

(72) Inventors:
• **SHAO, Zhenghan**
**Shenzhen, Guangdong 518129 (CN)**
• **LI, Chenming**
**Shenzhen, Guangdong 518129 (CN)**
• **PENG, Xueming**
**Shenzhen, Guangdong 518129 (CN)**

(74) Representative: **MERH-IP Matias Erny Reichl**
**Hoffmann**
**Patentanwälte PartG mbB**
**Paul-Heyse-Straße 29**
**80336 München (DE)**

(56) References cited:
WO-A1-2019/112514    CN-A- 104 156 926
CN-A- 107 818 550    CN-A- 108 181 635
CN-A- 108 919 295    CN-A- 110 458 780
US-A1- 2018 284 245    US-A1- 2019 178 989

• **ROBIN HEINZLER ET AL: "CNN-based Lidar**
**Point Cloud De-Noising in Adverse Weather",**
**ARXIV.ORG, CORNELL UNIVERSITY LIBRARY,**
**201 OLIN LIBRARY CORNELL UNIVERSITY**
**ITHACA, NY 14853, 9 December 2019**
**(2019-12-09), XP081597639, DOI: 10.1109/**
**LRA.2020.2972865**

Description

## TECHNICAL FIELD

This application relates to the field of autonomous driving, and more specifically, to a target recognition method and apparatus.

## BACKGROUND

For an autonomous driving technology, a lidar is one of main visual sensors on a vehicle. The lidar is an active sensor configured to detect a position of a target by emitting a laser beam, and may obtain distance information of the target based on a laser point cloud reflected from the target, to implement target detection, tracking and recognition. The lidar uses an infrared laser ranging method in which, due to impact of reflection of road dust, vehicle exhaust, and splash and spray on a waterlogged road surface, a large quantity of false reflection points are easily generated. These false reflection points may cause a recognition error, thereby affecting subsequent tracking path planning or the like.

Currently, existing methods for removing a false reflection point from a laser point cloud provide no suitable solution for false emission points (which may also be referred to as false target point clouds) caused by the road dust, the vehicle exhaust, and the like. In addition, most of the existing methods are relatively complex and have relatively high implementation costs. Consequently, still a relatively large quantity of false targets remain in the laser point cloud, greatly reducing precision and safety of autonomous driving.

The document "CNN-based Lidar Point Cloud De-Noising in Adverse Weather" by R. Heinzler et al. discloses a CNN-based approach to lidar point cloud de-noising in rainy and foggy conditions. Together with that, a data augmentation method to increase available training data is presented and the performance of several CNNs is compared.

## SUMMARY

This application provides a target recognition method and apparatus, to effectively reduce a false detection rate of a laser point cloud, and improve a detection rate of a false target in the laser point cloud. The method is simple and convenient to implement.

According to a first aspect, a target recognition method is provided. The method may be performed by a target recognition apparatus integrated on a mobile device. Alternatively, the method may be performed by a chip, a chip system, an integrated circuit, or the like on the mobile device. Alternatively, the method may be performed by a lidar. The method includes: receiving a target laser point cloud; generating a point cloud mesh corresponding to the target laser point cloud, where one point in the target laser point cloud corresponds to one valid point in the point cloud mesh; and determining, based on a geometric feature of the point cloud mesh, whether the target laser point cloud is a noise point cloud, where the geometric feature of the point cloud mesh includes microscopic roughness of the point cloud mesh and/or a distribution discontinuity of point clouds in the point cloud mesh. The mobile device may include a device that can change a spatial location or a spatial shape through an operation of a human, for example, a vehicle, an airplane, an unmanned aerial vehicle, or a ship.

According to the target recognition method provided in the first aspect, a laser point cloud is obtained by performing single frame detection by using a single lidar; the laser point cloud is converted into a mesh; and a geometric feature of the point cloud mesh instead of an intensity feature of a lidar reflection point is used to recognize whether the laser point cloud is a false target caused by splashing water due to road surface waterlogging or by road dust, vehicle exhaust, or the like. This can effectively reduce a false detection rate, and improve a false target detection rate. The method is simple and convenient to implement. In addition, because single frame detection is performed by using the single lidar, a calculation delay can be reduced.

In a possible implementation of the first aspect, the microscopic roughness of the point cloud mesh is a proportion of a total quantity of mutation points in the point cloud mesh to a quantity of valid points included in the point cloud mesh. The total quantity of mutation points in the point cloud mesh is a sum of quantities of mutation points in all rows in the point cloud mesh. In this implementation, the microscopic roughness of the point cloud mesh can be relatively quickly and simply determined. This is easy to implement and has relatively high precision and relatively low complexity.

In a possible implementation of the first aspect, the distribution discontinuity of the point clouds in the point cloud mesh is a sum of discontinuities of all columns of point clouds in the point cloud mesh. In this implementation, the distribution discontinuity of the point clouds in the point cloud mesh can be relatively quickly and simply determined. This is easy to implement and has relatively high precision and relatively low complexity.

In a possible implementation of the first aspect, the determining (or determining) whether the target laser point cloud is a noise point cloud includes:

if the microscopic roughness of the point cloud mesh is greater than or equal to a first threshold, determining that the target laser point cloud is a noise point cloud; and/or

if the distribution discontinuity of the point clouds in the point cloud mesh is greater than or equal to a second threshold, determining that the target laser point cloud is a noise point cloud.

In this implementation, the microscopic roughness of the point cloud mesh is compared with a preset threshold, and/or the distribution discontinuity of the point clouds in the point cloud mesh is compared with a preset threshold, to determine whether the laser point cloud is a noise point cloud. This is convenient to implement and has low complexity.

In a possible implementation of the first aspect, the method further includes:

if a quantity of valid points in an $i^{th}$ row of point clouds in the point cloud mesh is less than or equal to 2, determining that a quantity of mutation points in the $i^{th}$ row in the point cloud mesh is 0, where i is a positive integer; or

if a quantity of valid points in an $i^{th}$ row of point clouds in the point cloud mesh is greater than or equal to 3, sequentially selecting three consecutive valid points in the $i^{th}$ row of point clouds to determine whether a second valid point in the three consecutive valid points is a mutation point, where i is a positive integer, and

determining a quantity of mutation points in the $i^{th}$ row in the point cloud mesh based on whether a second valid point in every three consecutive valid points in the $i^{th}$ row of point clouds is a mutation point.

In this implementation, the quantity of mutation points in each row of point clouds is determined by using the foregoing method. This is convenient to implement. In addition, a result has relatively high precision and can better reflect mutation of each row of point clouds.

In a possible implementation of the first aspect, when the quantity of valid points in the $i^{th}$ row of point clouds in the point cloud mesh is greater than or equal to 3, and the three consecutive valid points in the $i^{th}$ row of point clouds are respectively a first valid point, the second valid point, and a third valid point, if a distance from a connection line between the first valid point and the third valid point to the second valid point is greater than or equal to a preset threshold, it is determined that the second valid point is a mutation point.

Alternatively, if a distance from a connection line between the first valid point and the third valid point to the second valid point is less than the preset threshold, it is determined that the second valid point is not a mutation point.

In a possible implementation of the first aspect, three consecutive valid points in the $i^{th}$ row of point clouds are respectively a first valid point P, a second valid point Q, and a third valid point S. O is a coordinate origin.

An included angle between $\overrightarrow{SP}$ and $\overrightarrow{SO}$ is β, an included angle between $\overrightarrow{OS}$ and $\overrightarrow{OQ}$ is θ, an included angle between $\overrightarrow{OQ}$ and $\overrightarrow{PS}$ is α, and α = 180° - θ - β.

$$\cos(\beta) = \frac{\overrightarrow{SP} \cdot \overrightarrow{SO}}{\left|\overrightarrow{SP}\right| \cdot \left|\overrightarrow{SO}\right|}, \text{ and } \cos(\theta) = \frac{\overrightarrow{OQ} \cdot \overrightarrow{OS}}{\left|\overrightarrow{OQ}\right| \cdot \left|\overrightarrow{OS}\right|}.$$

A reference point corresponding to the second valid point Q is $Q_1$, and $\left|\overrightarrow{OQ_1}\right| = \frac{\left|\overrightarrow{OS}\right|}{\sin(\alpha)} \cdot \sin(\beta)$.

If a difference between lengths of $|\overrightarrow{OQ_1}|$ and $|\overrightarrow{OQ}|$ is greater than or equal to a preset threshold, the second valid point Q is a mutation point. Alternatively, if a difference between lengths of $|\overrightarrow{OQ_1}|$ and $|\overrightarrow{OQ}|$ is less than the preset threshold, the second valid point Q is not a mutation point.

In a possible implementation of the first aspect, the method further includes:

projecting a valid point in the $i^{th}$ row of point clouds onto a plane;

determining, based on a first connection line between a first valid point with a maximum azimuth and a second valid point with a minimum azimuth on the plane, a third valid point with a maximum distance from the first connection line; and

if the distance between the third valid point and the first straight line is greater than or equal to a third threshold, determining that the third valid point is a first mutation point; separately determining, from valid points on the plane except the first valid point, the second valid point, and the third valid point, a fourth valid point with a maximum distance from a second connection line between the first valid point and the third valid point and a fifth valid point with a maximum distance from a third connection line between the second valid point and the third valid point, where if the distance between the fourth valid point and the second connection line is greater than or equal to the third threshold, a quantity of mutation points in the $i^{th}$ row of point clouds is increased by one, and if the distance between the fifth valid point and the third connection line is greater than or equal to the third threshold, the quantity of mutation points in the $i^{th}$ row of point clouds is increased by one; and repeating the process until no new straight line is generated on the plane, where a total quantity of mutation points in the $i^{th}$ row of point clouds may be obtained through accumulation.

If the distance between the third valid point and the first straight line is less than the third threshold, a total quantity of mutation points in the $i^{th}$ row of point clouds is 0.

In this implementation, the quantity of mutation points in each row of point clouds is determined by using the foregoing method. This is convenient to implement. In addition, a result has relatively high precision and can better reflect mutation of each row of point clouds.

In a possible implementation of the first aspect, the discontinuity of each column of point clouds in the point cloud mesh is determined based on a quantity of valid points included in each column of point clouds.

In a possible implementation of the first aspect, the method further includes:

if a quantity of valid points in a $j^{th}$ column of point clouds in the point cloud mesh is 0, determining that a discontinuity of the $j^{th}$ column of point clouds is a, where j is a positive integer, and a is a positive number; or

if a quantity of valid points in a $j^{th}$ column of point clouds in the point cloud mesh is 1, and the $j^{th}$ column is a last column or a first column in the point cloud mesh, determining that a discontinuity of the $j^{th}$ column of point clouds is 0, where j is a positive integer; or

if a quantity of valid points in a $j^{th}$ column of point clouds in the point cloud mesh is 1, and a quantity of valid points in a $(j+1)^{th}$ column or a $(j-1)^{th}$ column of point clouds in the point cloud mesh is greater than 1, determining that a discontinuity of the $j^{th}$ column of point clouds is b, where j is an integer greater than 1, and b is a positive number; or

if a quantity of valid points in a $j^{th}$ column of point clouds in the point cloud mesh is greater than 1, determining whether row coordinates corresponding to the valid points in the $j^{th}$ column of point clouds are consecutive; and if the row coordinates are consecutive, determining that a discontinuity of the $j^{th}$ column of point clouds is 0, or if the row coordinates are not consecutive, determining that a discontinuity of the $j^{th}$ column of point clouds is c, where j is an integer greater than 1, and c is a positive number.

In this implementation, a discontinuity of each column of point clouds is determined by using the foregoing method. This is convenient to implement and has low complexity. In addition, a result has relatively high precision and can better reflect the discontinuity of each column of point clouds.

In a possible implementation of the first aspect, the target laser point cloud is obtained by performing single frame detection by using the single lidar. In this implementation, the point cloud mesh is obtained by using the single lidar and a single frame of point cloud, so that the calculation delay is reduced. In addition, calibration of the single lidar is simple, and is convenient to implement.

In a possible implementation of the first aspect, the false target laser point is caused by one or more of the splashing water due to road surface waterlogging, the vehicle exhaust, or the road dust.

According to a second aspect, a target recognition apparatus is provided. The apparatus includes units configured to perform the steps in the first aspect or any possible implementation of the first aspect.

According to a third aspect, a target recognition apparatus is provided. The apparatus includes at least one processor and a memory, and the at least one processor is configured to perform the method in the first aspect or any possible implementation of the first aspect.

According to a fourth aspect, a target recognition apparatus is provided. The apparatus includes at least one processor and an interface circuit, and the at least one processor is configured to perform the method in the first aspect or any possible implementation of the first aspect.

According to a fifth aspect, a lidar is provided. The lidar includes the target recognition apparatus provided in the third aspect, the fourth aspect, or the fifth aspect.

Optionally, the lidar may be mounted on a mobile device. Optionally, the mobile device may include a device that can change a spatial location or a spatial shape through an operation of a human, such as a vehicle, an airplane, an unmanned aerial vehicle, or a ship.

According to a sixth aspect, a computer program product is provided. The computer program product includes a computer program. When the computer program is executed by a processor, the computer program is used to perform the method in the first aspect or any possible implementation of the first aspect.

According to a seventh aspect, a computer-readable storage medium is provided. The computer-readable storage medium stores a computer program. When being executed, the computer program is used to perform the method in the first aspect or any possible implementation of the first aspect, or perform the method in the second aspect or any possible implementation of the second aspect.

According to an eighth aspect, a chip or an integrated circuit is provided. The chip or the integrated circuit includes a processor. The processor is configured to invoke a computer program from a memory and run the computer program, so that a device on which the chip or the integrated circuit is installed is enabled to perform the method in the first aspect or any possible implementation of the first aspect.

According to a ninth aspect, a chip system is provided. The chip system is applied to a lidar. The chip system includes one or more interface circuits and one or more processors. The interface circuit and the processor are interconnected through a line. The processor is configured to perform the method in the first aspect or any possible implementation of the first aspect.

According to the target recognition method and apparatus provided in the embodiments of this application, a laser point cloud is obtained by performing single frame detection by using a single lidar; the laser point cloud is converted into a mesh; and a geometric feature of the point cloud mesh instead of an intensity feature of a lidar reflection point is used to determine whether the laser point cloud is a false target caused by splashing water due to road surface waterlogging or by road dust, vehicle exhaust, or the like. This can effectively reduce a false detection rate, and improve a false target detection rate. The method can be applied to and compatible with different models and brands of lidars, and is simple and convenient to implement. In addition, because single frame detection is performed by using the single lidar, a calculation delay can be reduced.

## BRIEF DESCRIPTION OF DRAWINGS

FIG. 1 is a schematic diagram of a basic working principle of a lidar;
FIG. 2 is a schematic flowchart of a target recognition method according to an embodiment of this application;
FIG. 3 is a schematic diagram of a beam of a lidar according to an embodiment of this application;
FIG. 4 is a schematic diagram of converting a target laser point cloud into a point cloud mesh according to an embodiment of this application;
FIG. 5 is a schematic diagram of a point cloud mesh according to an embodiment of this application;
FIG. 6 is a schematic diagram of converting three consecutive valid points in a row in a point cloud mesh to an x-o-y plane according to an embodiment of this application;
FIG. 7 is a schematic diagram of converting all valid points in a row in a point cloud mesh to an x-o-y plane according to an embodiment of this application;
FIG. 8 is a schematic diagram of another point cloud mesh according to an embodiment of this application;
FIG. 9 is a schematic block diagram of a target recognition apparatus according to an embodiment of this application; and
FIG. 10 is a schematic block diagram of another target recognition apparatus according to an embodiment of this application.

## DESCRIPTION OF EMBODIMENTS

The following describes technical solutions of this application with reference to accompanying drawings.

In recent years, with continuous development of artificial intelligence technologies, major high-tech enterprises, research institutes, and scholars have increased research investments in the field of autonomous driving. Currently, for autonomous driving, the industry generally accepts that a lidar is one of indispensable sensors. The lidar is an active sensor that detects a position of a target by emitting a laser beam. A working principle is that the lidar transmits a detection signal (which may also be referred to as a laser beam) to the target, and then compares a timestamp of a received signal (which may also be referred to as a target echo) reflected from the target with a timestamp of the transmitted signal. Based on the speed of light, distance information of the target may be obtained, to implement target detection, tracking, and recognition. Generally, the lidar includes a laser transmitter, an optical receiver, a turntable, and an information processing system. The laser transmitter converts an electrical pulse into an optical pulse and emits the optical pulse, and the optical receiver restores an optical pulse reflected from the target to an electrical pulse and sends the electrical pulse to the information processing system. Currently, in the field of autonomous driving, for example, on a vehicle supporting autonomous driving, tasks undertaken by the lidar generally include target detection, target tracking, and the like.

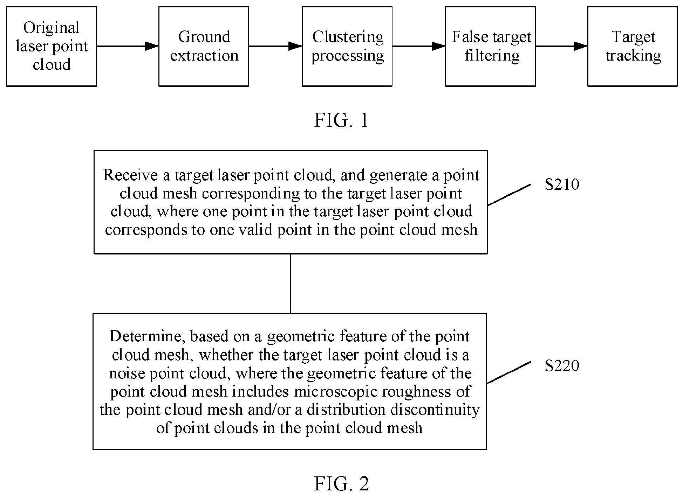

A basic working principle of the lidar is shown in FIG. 1. The lidar obtains original laser point clouds through scanning. For the original laser point clouds, ground extraction first needs to be performed to remove a ground point, and then non-ground point clouds are clustered to obtain target point clouds. Before the target point clouds are sent to a target tracking module, an unreasonable false target point cloud needs to be filtered out to avoid adverse impact on tracking and a subsequent planning control module. The point cloud may be understood as a point data set, obtained by using a measurement instrument, of an appearance surface of a product, and is referred to as a point cloud. The laser point cloud may be understood as: When a beam of laser light irradiates on a surface of an object, reflected laser light carries information such as an orientation and a distance. If the laser beam performs scanning based on a specific track, reflected laser point information is recorded while scanning. Because the scanning is very fine, a large quantity of laser points can be obtained, thereby forming the laser point cloud. The laser point cloud is a three-dimensional description, of an ambient environment, that is obtained by the lidar scanning the ambient environment.

In a road traffic scenario, the lidar uses an infrared laser ranging method in which, due to impact of road dust, vehicle exhaust, and splash and spray a waterlogged road surface, a large quantity of false reflection points are easily generated. These false reflection points are clustered to generate a large quantity of false target point clouds that affect subsequent tracing and path planning.

Currently, some scholars have proposed an anti-interference processing method for data of a lidar in a rainy environment and an experimental apparatus thereof. In this method, data of the lidar in a simulated rainy environment is sampled, and the laser data is converted into an image based on a measured distance and an intensity of a laser reflection point. After the image is filtered, a rain-interfered point is eliminated by using an algorithm for comparing consecutive frames. This method provides a solution to a method for processing data of a two-dimensional lidar in the rainy environment.

However, intensity information of the lidar is used in the foregoing method. An intensity of the lidar is a measurement index (collected for each laser reflection point) reflecting an echo intensity of a lidar pulse that generates a point. The intensity value is to some extent equal to a reflectivity of an object scanned by the lidar pulse. A reflectivity is a function of a wavelength (usually in a near-infrared band) used by the lidar. Intensity values of lidars of different manufacturers are different, so that applicability of the method to the lidars of different manufacturers is limited. Moreover, because the consecutive frames are used in the algorithm, there is a delay in raindrop detection, and a false target caused by a raindrop cannot be removed immediately. Therefore, adverse impact on subsequent tracking cannot be completely avoided. Further, in this method, a grayscale image, which is a data structure, needs to be separately established, and therefore there is a waste of computing power. Moreover, because the intensity information of the lidar is used, only a raindrop with a very low reflection intensity can be removed, but a false target caused by dust or vehicle exhaust on a road surface cannot be removed.

In addition, some other scholars have provided another method that is based on a dual-lidar-based raindrop reflection point removal algorithm. In this method, two lidars are configured to perform scanning at the same time. After being processed, a point not scanned by the two lidars is a false reflection point caused by a raindrop.

However, because the algorithm requires two lidars, hardware costs are relatively high. Point cloud data of the two lidars needs to be precisely synchronous in time and consistent in space. Therefore, the algorithm is relatively complex, and has very high requirements on measurement precision of each lidar and calibration precision. Moreover, the algorithm only mentions a removal of the false reflection point caused by the raindrop, but false targets caused by road dust and vehicle exhaust cannot be effectively removed.

It can be learned that the currently provided methods for removing a false target from a laser point cloud cannot effectively remove the false targets caused by the road dust and the vehicle exhaust. In addition, the methods are relatively complex and have relatively high implementation costs. Consequently, still a relatively large quantity of false targets remain in the laser point cloud, greatly reducing precision and safety of autonomous driving.

Based on this, this application provides a target recognition method. A laser point cloud obtained by performing single frame detection by using a single lidar is converted into a mesh. A geometric feature of the mesh instead of an intensity feature of the laser point cloud is used to determine whether the laser point cloud is a false target caused by splashing water due to road surface waterlogging or by road dust, vehicle exhaust, or the like. This can effectively reduce a false detection rate, and improve a false target detection rate. The method can be applied to and compatible with different models and brands of lidars, and is simple and convenient to implement.

The target recognition method provided in this application may be applied to the field of autonomous driving. For example, the method may be applied to a mobile device supporting autonomous driving. The mobile device may include a device that can change a spatial location or a spatial shape through an operation of a human, such as a vehicle, an airplane, an unmanned aerial vehicle, or a ship. A specific form of the mobile device is not limited in this application.

The following describes in detail a target recognition method provided in this application with reference to FIG. 2. FIG. 2 is a schematic flowchart of a target recognition method 200 according to an embodiment of this application.

It should be understood that the target recognition method provided in this application may be performed by a target recognition apparatus integrated on a mobile device. Alternatively, the method may be performed by a chip, a chip system, an integrated circuit, or the like on the mobile device. Alternatively, the method may be performed by a lidar, and the lidar includes the chip, the chip system, or the integrated circuit. This is not limited herein in this application.

As shown in FIG. 2, the method 200 includes the following steps:

S210: Receive a target laser point cloud, and generate a point cloud mesh corresponding to the target laser point cloud, where one point in the target laser point cloud corresponds to one valid point in the point cloud mesh.

S220: Determine, based on a geometric feature of the point cloud mesh, whether the target laser point cloud is a noise point cloud, where the geometric feature of the point cloud mesh includes microscopic roughness of the point cloud mesh and/or a distribution discontinuity of point clouds in the point cloud mesh.

In S210, the lidar first obtains an original laser point cloud through scanning. It should be understood that, in this embodiment of this application, the original laser point cloud is obtained by performing single frame detection by using a single lidar. For received original laser point clouds, a ground point may first be removed, and then non-ground point clouds are clustered to obtain target laser point clouds (which may also be referred to as target point clouds). Because the target point clouds may include a false target point cloud caused by splashing water due to road surface waterlogging, or by road dust, vehicle exhaust, or the like, the unreasonable false target point cloud needs to be removed from the target point clouds. In this embodiment of this application, the point cloud mesh (mesh) corresponding to the target laser point cloud may be generated. One point in the target laser point cloud corresponds to one valid point in the point cloud mesh. The valid point in the point cloud mesh may be understood as a return point, namely, a point that is received by the lidar and that is reflected from a target. For example, the target herein includes: a false target caused by vehicle exhaust, splashing water. or dust on a road surface; a false target having a disordered surface, such as a roadside bush; and a valid target that can be effectively used for subsequent tracking and path planning of a vehicle, such as an obstacle (for example, a pedestrian or a roadside building) next to the vehicle.

In S220, whether the target laser point cloud is a noise point cloud is recognized (or determined) based on the geometric feature of the point cloud mesh. In this embodiment of this application, the noise point cloud refers to a laser point cloud in the target laser point clouds that does not represent a valid target in a driving process of the vehicle, and the noise point cloud is not processed in the subsequent tracking and path planning of the vehicle. The noise point cloud may also be referred to as a false target laser point cloud. The noise point cloud may be understood as a target point cloud caused by the splashing water due to road surface waterlogging, or by the road dust, the vehicle exhaust, or the false target having a disordered surface, such as the roadside bush. Laser point clouds caused by these false targets affect the subsequent tracking and path planning, and the like. Therefore, noise point clouds caused by these false targets need to be removed or labeled as invalid, and the noise point clouds are not processed in subsequent processing.

The geometric feature of the point cloud mesh includes microscopic roughness of the point cloud mesh and/or a distribution discontinuity of point clouds in the point cloud mesh. The microscopic roughness of the point cloud mesh may be understood as a mutation degree or a difference between valid points in the point cloud mesh. The distribution discontinuity of the point clouds in the point cloud mesh may be understood as a discontinuity between the valid points in the point cloud mesh. Further, whether the target laser point cloud is a noise point cloud may be recognized or determined by using the geometric feature of the point cloud mesh. For example, the greater the microscopic roughness of the point cloud mesh, the more likely the laser point cloud is to be a noise point cloud. The greater the distribution discontinuity of the point clouds in the point cloud mesh, the more likely the laser point cloud is to be a noise point cloud.

It should be understood that a substance of step S220 is to recognize a target laser point cloud that is not suitable for subsequent processing in the subsequent tracking and path planning of the vehicle. Therefore, the following alternative solution also falls within the scope of step S220:

labeling the target laser point cloud as invalid based on the geometric feature of the point cloud mesh; or
determining, based on the geometric feature of the point cloud mesh, that the target laser point cloud is not used as an input in the subsequent processing of the vehicle.

The labeling the target laser point cloud as invalid means that the target point cloud is not processed in the subsequent tracking and path planning of the vehicle.

Specifically, the labeling the target laser point cloud as invalid may include:

if the microscopic roughness of the point cloud mesh is greater than or equal to a first threshold, labeling the target laser point cloud as invalid; and/or
if the distribution discontinuity of the point clouds in the point cloud mesh is greater than or equal to a second threshold, labeling the target laser point cloud as invalid.

According to the target recognition method provided in this application, a laser point cloud is obtained by performing single frame detection by using a single lidar; the laser point cloud is converted into a mesh; and a geometric feature of the point cloud mesh instead of an intensity feature of a lidar reflection point is used to determine whether the laser point cloud is a false target caused by splashing water due to road surface waterlogging or by road dust, vehicle exhaust, or the like. This can effectively reduce a false detection rate, and improve a false target detection rate. The method is simple and convenient to implement. In addition, because single frame detection is performed by using the single lidar, a calculation delay can be reduced.

The following briefly describes a process of generating the point cloud mesh corresponding to the target laser point cloud.

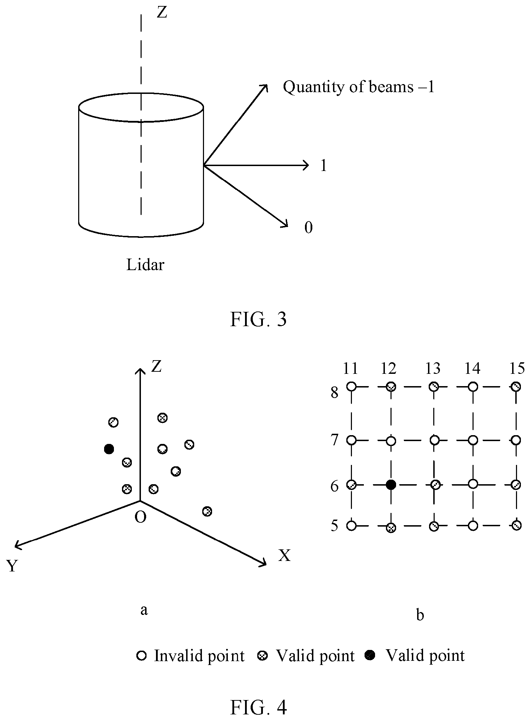

FIG. 3 is a schematic diagram of a beam of the lidar. A lidar used for autonomous driving generally has a plurality of laser beams (Beam). For example, 16 beams, 32 beams, and 64 beams are commonly used. The beams each have a channel number, and the channel numbers are respectively 0 to a quantity of beams - 1 from bottom to top. Optionally, if original numbers of the beams of the lidar are not in this sequence, the channel numbers may alternatively be remapped when the point cloud mesh is generated, to meet the sequence. All the beams synchronously perform scanning around a vertical axis (Z axis) of the lidar. A scanned angle may be referred to as an azimuth $\gamma$. Sampling is performed each time a specific angle is scanned, and the angle scanned each time may be referred to as a horizontal angular resolution $\alpha_h$.

A figure a in FIG. 4 is a schematic diagram of a laser point cloud in an X-Y-Z coordinate system. A black point shown in the figure a in FIG. 4 is used as an example. The azimuth $\gamma$ may be obtained through calculation based on coordinates of the point on an X-O-Y plane, divided by the horizontal angular resolution $\alpha_h$, and then rounded up to obtain a column coordinate (for example, 12) of the point in the mesh. If the point is obtained through scanning by a beam with a channel number 6, a row coordinate of the point in the mesh is 6. If row coordinates of points in the target point cloud are between 5 and 8, and column coordinates are between 11 and 15, the target point cloud may be converted into a mesh with four rows and five columns. A figure b in FIG. 4 is a schematic diagram of a point cloud mesh obtained based on the figure a.

A column coordinate, in the mesh, that corresponds to any point in the laser point cloud may be obtained through calculation by using a formula (1), and a row (row) coordinate is a lidar beam channel (laser beam channel) number of the point:

$$\text{column coordinate (col)} = \left\lceil \frac{\gamma}{\alpha_h} \right\rceil \tag{1}$$

In the formula (1), $\gamma$ is an azimuth of the point, and $\alpha_h$ is a horizontal angle resolution of the point.

By using the foregoing method, the target laser point cloud can be converted into the point cloud mesh. The point cloud mesh shown in the figure b in FIG. 4 includes a valid point and an invalid point. The valid point may also be referred to as a return point. The invalid point indicates that a laser emitted by the lidar beam does not receive a point reflected from the target. In other words, the invalid point in the point cloud mesh does not have a laser point cloud, and only occupies a position in the point cloud mesh.

Optionally, in this embodiment of this application, in a possible implementation, in S220, the determining whether the target laser point cloud is a noise point cloud may specifically include:

> if the microscopic roughness of the point cloud mesh is greater than or equal to the first threshold, determining or determining that the target laser point cloud is a noise point cloud; and/or
> if the distribution discontinuity of the point clouds in the point cloud mesh is greater than or equal to the second threshold, determining or determining that the target laser point cloud is a noise point cloud.

Specifically, whether the target laser point cloud is a noise point cloud may be determined or determined based on the geometric feature of the point cloud mesh in the following three possible manners.

In a possible implementation, the microscopic roughness of the point cloud mesh is compared with a preset threshold (the first threshold). For example, if the microscopic roughness of the point cloud mesh is greater than or equal to the first threshold (or greater than the first threshold), it is determined that the target laser point cloud is a noise point cloud. If the microscopic roughness of the point cloud mesh is less than the first threshold (or less than or equal to the first threshold), it is determined that the target laser point cloud is not a noise point cloud. In other words, the target laser point cloud is a target point cloud that can be used for the subsequent tracking and path planning of the vehicle.

In another possible implementation, the distribution discontinuity of the point clouds in the point cloud mesh is compared with a preset threshold (the second threshold). For example, if the distribution discontinuity of the point clouds in the point cloud mesh is greater than or equal to the second threshold (or greater than the second threshold), it is determined that the target laser point cloud is a noise point cloud. If the distribution discontinuity of the point clouds in the point cloud mesh is less than the second threshold (or less than or equal to the second threshold), it is determined that the target laser point cloud is not a noise point cloud. In other words, the target laser point cloud is a target point cloud that can be used for the subsequent tracking and path planning of the vehicle.

In still another possible implementation, determining is performed with reference to the microscopic roughness and the distribution discontinuity of the point cloud mesh. For example, if the microscopic roughness of the point cloud mesh is greater than or equal to the first threshold (or greater than the first threshold), and the distribution discontinuity of the point clouds in the point cloud mesh is greater than or equal to the second threshold (or greater than the second threshold), it is determined that the target laser point cloud is a noise point cloud. If the microscopic roughness of the point cloud mesh is less than the first threshold (or less than or equal to the first threshold), or the distribution discontinuity of the point clouds in the point cloud mesh is less than the second threshold (or less than or equal to the second threshold), it is determined that the target laser point cloud is not a noise point cloud.

It should be understood that the foregoing three manners are merely examples for description that, in this embodiment of this application, whether the target laser point cloud is a noise point cloud is determined by using the geometric feature of the point cloud mesh. It should be understood that, in this embodiment of this application, the geometric feature of the point cloud mesh may further include a geometric feature of another dimension or type. In addition, in a process of determining, based on the microscopic roughness and/or the distribution discontinuity of the point cloud mesh, whether the target laser point cloud is a noise point cloud, determining may be performed in another manner or according to another rule and by using the microscopic roughness and/or the distribution discontinuity of the point cloud mesh. This is not limited in this embodiment of this application.

Optionally, in a possible implementation. in this embodiment of this application, the microscopic roughness of the point cloud mesh (or a value of the microscopic roughness of the point cloud mesh) may be a proportion of a total quantity of mutation points in the point cloud mesh to a quantity of valid points included in the point cloud mesh. The total quantity of mutation points in the point cloud mesh is a sum of quantities of mutation points in all rows in the point cloud mesh. The mutation point in the point cloud mesh may be understood as a partially valid point included in the point cloud mesh, and a mutation degree or a difference between the partially valid point and another valid point is relatively large. In other words, the mutation points may be a subset of the valid points in the point cloud mesh. Optionally, the total quantity of mutation points in the point cloud mesh may be the sum of the quantities of mutation points in all the rows in the point cloud mesh. To be specific, the quantity of mutation points in the point cloud mesh may be evaluated row by row, to finally obtain the total quantity of mutation points in the point cloud mesh.

Optionally, in a possible implementation, in this embodiment of this application, the distribution discontinuity of the point clouds in the point cloud mesh is a sum of discontinuities of all columns of point clouds in the point cloud mesh. To be specific, discontinuities of valid point clouds in all the columns in the point cloud mesh may be evaluated column by column, and the discontinuities of all the columns are added to finally obtain the distribution discontinuity of the point clouds in the point cloud mesh.

It should be understood that, in this embodiment of this application, the microscopic roughness of the point cloud mesh may be determined in another manner. For example, microscopic roughness of the valid point clouds in all the columns in the point cloud mesh is evaluated column by column (for example, a quantity of mutation points in each column in the point cloud mesh is determined), and quantities of mutation points in the valid point clouds in all the columns are added to obtain the total quantity of mutation points in the point cloud mesh. Finally, a proportion of the total quantity of mutation points in the point cloud mesh to the quantity of valid points included in the point cloud mesh is obtained, to obtain the microscopic roughness of the point cloud mesh. Similarly, for the distribution discontinuity of the point clouds in the point cloud mesh, the discontinuity of the point cloud mesh is also determined row by row, and discontinuities of all rows are added to finally obtain the distribution discontinuity of the point clouds in the point cloud mesh. Alternatively, the microscopic roughness and the distribution discontinuity of the point cloud mesh may be determined by using another calculation method. A specific manner or algorithm for determining the microscopic roughness and the distribution discontinuity of the point cloud mesh is not limited in this application.

The following describes in detail calculation processes of the microscopic roughness and the distribution discontinuity of the point cloud mesh.

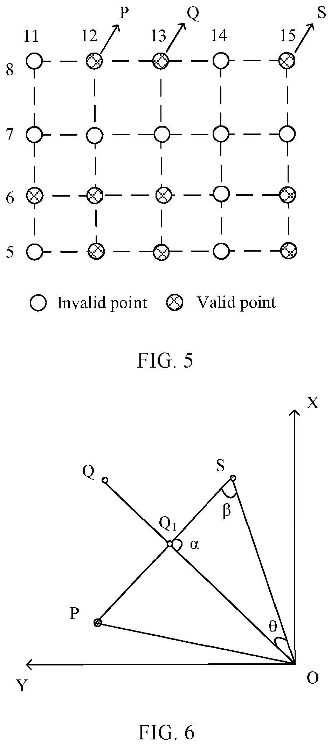

First, the calculation process of the microscopic roughness of the point cloud mesh is introduced. A target point cloud mesh shown in FIG. 5 is used as an example for description. A total quantity of mutation points in the point cloud mesh may be a sum of quantities of mutation points in all rows in the point cloud mesh. For the target point cloud mesh shown in FIG. 5:

For a first row (whose row coordinate in the point cloud mesh is 8), if a quantity of valid points in the first row of point clouds is equal to 3, the three valid points are three consecutive valid points by default. It is assumed that the three consecutive valid points are respectively a first valid point, a second valid point, and a third valid point. If a distance from a connection line between the first valid point and the third valid point to the second valid point is greater than or equal to a preset threshold, it is determined that the second valid point is a mutation point. Alternatively, if a distance from a connection line between the first valid point and the third valid point to the second valid point is less than the preset threshold, the second valid point is not a mutation point. The following provides specific description with reference to examples.

The three consecutive valid points in the first row of point clouds are selected to determine whether the second valid point in the three consecutive valid points is a mutation point. It is assumed that the three valid points in the first row are respectively a first valid point P (whose coordinates in the point cloud mesh are (8, 12)), a second valid point Q whose coordinates in the point cloud mesh are (8, 13), and a third valid point S whose coordinates in the point cloud mesh are (8, 15). The three valid points are projected onto the x-o-y plane, to obtain a coordinate graph of the three valid points shown in FIG. 5 on the x-o-y plane. As shown in FIG. 6, it is assumed that a micro region in which the point P and the point S are located is very smooth. In this case, the point Q should be on a straight line connected by the point P and the point S.

Because the coordinates of the point P and the point S are known, according to a vector dot product formula, as shown in FIG. 6, O is a coordinate origin, an included angle between $\overrightarrow{SP}$ and $\overrightarrow{SO}$ is β, an included angle between $\overrightarrow{OS}$ and $\overrightarrow{OQ}$ is θ, and an included angle between $\overrightarrow{OQ}$ and $\overrightarrow{PS}$ is α, where α = 180° - θ - β.

In this case, the following formulas are obtained:

$$\cos(\beta) = \frac{\overrightarrow{SP} \cdot \overrightarrow{SO}}{\left|\overrightarrow{SP}\right| \cdot \left|\overrightarrow{SO}\right|} \qquad (2)$$

$$\cos(\theta) = \frac{\overrightarrow{OQ} \cdot \overrightarrow{OS}}{\left|\overrightarrow{OQ}\right| \cdot \left|\overrightarrow{OS}\right|} \qquad (3)$$

It is assumed that a reference point corresponding to the second valid point Q is $Q_1$. In this case, according to the sine theorem:

$$\left|\overrightarrow{OQ_1}\right| = \frac{\left|\overrightarrow{OS}\right|}{\sin(\alpha)} \cdot \sin(\beta) \qquad (4)$$

Determining is further performed. If a difference between lengths of $\left|\overrightarrow{OQ_1}\right|$ and $\left|\overrightarrow{OQ}\right|$ is greater than or equal to a preset threshold, the second valid point Q is a mutation point. Alternatively, if a difference between lengths of $\left|\overrightarrow{OQ_1}\right|$ and $\overrightarrow{OQ}$ is less than the preset threshold, the second valid point Q is not a mutation point.

According to the foregoing method, it may be determined whether the second valid point Q in the first row is a mutation point. If yes, a quantity of mutation points in the first row is 1. If no, the quantity of mutation points in the first row is 0. Because there are only three valid points in the first row, there is a maximum of one mutation in the first row.

For a second row (whose row coordinate in the point cloud mesh is 7), because there is no valid point in the second row, a quantity of mutation points in the second row in the point cloud mesh is 0.

For a third row (whose row coordinate in the point cloud mesh is 6), because there are four valid points in the third row, each time three points are selected for determining by using the same method as the first row. For example, it is assumed that the four valid points in the third row are a fourth valid point (whose coordinates in the point cloud mesh are (6, 11)), a fifth valid point (whose coordinates in the point cloud mesh are (6, 12)), a sixth valid point (whose coordinates in the point cloud mesh are (6, 13)), and a seventh valid point (whose coordinates in the point cloud mesh are (6, 15)) in sequence. First, the fourth valid point, the fifth valid point, and the sixth valid point are selected, and whether the fifth valid point is a mutation point is determined according to the same method as the first row. After whether the fifth valid point is a mutation point is determined, the fifth valid point, the sixth valid point, and the seventh valid point are selected, and whether the sixth valid point is a mutation point is determined according to the same method as the first row. In this way, a quantity of mutation points in the third row may be determined. Because there are only four valid points in the third row, the quantity of mutation points in the third row may be: 2 (the fifth valid point and the sixth valid point). 1 (the fifth valid point or the sixth valid point), and 0.

For a fourth row (whose row coordinate in the point cloud mesh is 5), because there are three valid points in the fourth row, whether a second valid point (whose coordinates in the point cloud mesh are (5, 13)) in the three valid points is a mutation point is determined according to the same method as the first row. If yes, a quantity of mutation points in the fourth row is 1. If no, the quantity of mutation points in the fourth row is 0. Because there are only three valid points in the fourth row, there is a maximum of one mutation in the fourth row.

According to the foregoing method, if a quantity of valid points in an $i^{th}$ row of point clouds in the point cloud mesh is less than or equal to 2, it is determined that a quantity of mutation points in the $i^{th}$ row in the point cloud mesh is 0, where i is a positive integer. The quantity of mutation points in the $i^{th}$ row in the point cloud mesh is determined based on whether a second valid point in every three consecutive valid points in the $i^{th}$ row of point clouds is a mutation point. In this way, quantities of mutation points in all rows may be determined, and then the quantities of mutation points in all rows are added to obtain a total quantity of mutation points in the point cloud mesh. Then, a proportion of the total quantity of mutation points in the point cloud mesh to a quantity of all valid points included in the point cloud mesh is calculated, to obtain microscopic roughness of the point cloud mesh.

Optionally, in another possible implementation, another method may be used for calculating the microscopic roughness of the point cloud mesh. For any point cloud mesh, a total quantity of mutation points in the point cloud mesh may be a sum of quantities of mutation points in all rows in the point cloud mesh. For the quantity of mutation points in each row of the point cloud mesh, all valid points in the row can be projected onto the X-O-Y plane. Based on a first connection line between a first valid point with a maximum azimuth and a second valid point with a minimum azimuth on the X-O-Y plane, a third valid point with a maximum distance from the first connection line is determined.

If the distance between the third valid point and the first straight line is greater than or equal to a preset threshold (a third threshold), it is determined that the third valid point is a first mutation point. A fourth valid point with a maximum distance from a second connection line between the first valid point and the third valid point and a fifth valid point with a maximum distance from a third connection line between the second valid point and the third valid point are separately determined from valid points on the X-O-Y plane except the first valid point, the second valid point, and the third valid point. If the distance between the fourth valid point and the second connection line is greater than or equal to the third threshold (which may alternatively be another preset threshold), a quantity of mutation points in the row of point clouds is increased by one, and if the distance between the fifth valid point and the third connection line is greater than or equal to the third threshold (which may alternatively be another preset threshold), the quantity of mutation points in the row of point clouds is increased by one. In other words, two new straight lines are added each time a new valid point is determined. The process is repeated until there is no remaining unused valid point in the point cloud mesh, that is, no new straight line is generated. A total quantity of mutation points in the row of point clouds can be obtained through accumulation.

If the distance between the third valid point and the first straight line is less than the third threshold, the total quantity of mutation points in the row of point clouds is 0.

In other words, after the first connection line is determined based on a valid point A (the valid point with the maximum azimuth) and a valid point B (the valid point with the minimum azimuth), a valid point C with a maximum distance from the first connection line may be determined based on the first connection line. Because the valid point C is determined based on the valid point A and the valid point B, a straight line may be determined between the valid point C and the valid point A, and a straight line may be determined between the valid point C and the valid point B. The two straight lines may be separately equivalent to the first connection line. For each straight line, in remaining unused valid points in the point cloud mesh, a new valid point and a new straight line may be determined by using a method similar to that for determining the valid point C, until there is no remaining unused valid point in the point cloud mesh, that is, no new straight line is generated. For each newly determined valid point, a distance between the newly determined valid point and a straight line generating the newly determined valid point is compared with the preset threshold, to determine whether the newly determined valid point is a mutation point. The total quantity of mutation points in the row of point clouds can be obtained by accumulating the mutation points.

For example, it is assumed that there are nine valid points on the X-O-Y plane, and numbers of the valid points are respectively 1, 2, 3, ..., 9. It is assumed that the valid point 1 and the valid point 2 are respectively the valid point with the maximum azimuth and the valid point with the minimum azimuth. In this case, a sequence of straight lines that are sequentially generated may be shown in Table 1.

**Table 1**

| Sequence number of a generated straight line | Numbers of valid points generating the straight line | Quantity of newly added straight lines | Quantity of newly determined valid points |
|---|---|---|---|
| 1 | (1, 2) | 0 | 0 |
| 2 | (1, 3), (2, 3) | 2 | 1 |
| 3 | (1, 4), (4, 3), (2, 5), (3, 5) | 4 | 2 |
| 4 | (1, 6), (4, 6), (4, 7), (3, 7), (2, 8), (5, 8), (3, 9), (5, 9), | 8 | 4 |

In Table 1, a sequence number of a generated straight line indicates a sequence of the generated straight line. A smaller sequence number of a straight line indicates that the straight line is generated earlier. For example, a straight line with a sequence number 1 is generated first, and a straight line with a sequence number 2 is generated second. Each time a new valid point is determined from the unused valid points, two new straight lines are added.

The following provides description with reference to specific examples.

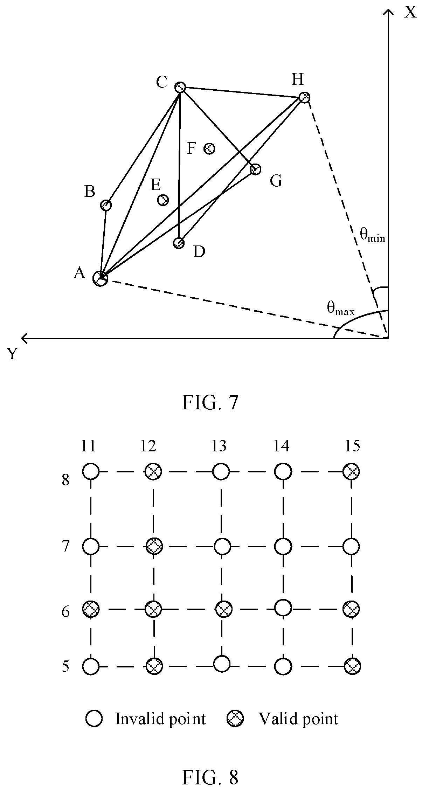

For example, it is assumed that FIG. 7 is a schematic diagram of projecting all valid points in a row in a point cloud mesh onto the X-O-Y plane. As shown in FIG. 7, on the X-O-Y plane, a point A with a maximum azimuth ($\theta_{max}$) and a point H with a minimum azimuth ($\theta_{min}$) are selected, and A and H are connected to form a straight line. Then, a point C with a maximum distance from the straight line AH is determined, and the distance (which is assumed as $L_1$) from the point C to the straight line AH is determined. If $L_1$ is greater than or equal to a preset threshold, it is proved that the point C is a mutation point. If $L_1$ is less than the preset threshold, it is proved that the point C is not a mutation point, and it may be determined that there is no mutation point in the point cloud mesh.

If $L_1$ is greater than or equal to the preset threshold, further, A and C are connected to form a straight line, and C and H are connected to form a straight line. In valid points on the X-O-Y plane except the point A, the point C, and the point H, a point with a maximum distance from the straight line AC and a point with a maximum distance from the straight line CH are separately determined. It is assumed that the point with the maximum distance (which is assumed as $L_2$) from the straight line AC is a point G, and the point with the maximum distance (which is assumed as $L_3$) from the straight line CH is a point D. Whether $L_2$ exceeds a preset threshold and whether $L_3$ exceeds a preset threshold continue to be determined. If both the preset thresholds are exceeded, it is proved that both the points G and D are mutation points. If neither of the preset thresholds is exceeded, it is proved that neither the point G nor the point D is a mutation point. In other words, there is only one mutation point C in the point cloud mesh. It should be understood that the threshold for comparison with $L_2$ may be the same as or different from the threshold for comparison with $L_3$. Optionally, the threshold for comparison with $L_2$ may be the same as or different from the threshold for comparison with $L_1$.

If $L_2$ exceeds the preset threshold and $L_3$ does not exceed the preset threshold, it is proved that the point G is also a mutation point, but the point D is not a mutation point. Further, A and G continue to be connected to form a straight line AG, and C and G continue to be connected to form a straight line CG. In valid points on the X-O-Y plane except the point A, the point C, the point H, the point G, and the point D, a point with a maximum distance from the straight line AG and a point with a maximum distance from the straight line CG continue to be determined, and then the distances are separately compared with preset thresholds. The process is repeated until all remaining valid points in the row of point clouds on the plane are covered, and a total quantity of mutation points in the row of point clouds may be obtained through accumulation.

If $L_2$ does not exceed the preset threshold and $L_3$ exceeds the preset threshold, it is proved that the point G is not a mutation point, but the point D is a mutation point. Further, C and D continue to be connected to form a straight line CD, and H and D continue to be connected to form a straight line HD. In valid points on the X-O-Y plane except the point A, the point C, the point H, the point G, and the point D, a point with a maximum distance from the straight line CD and a point with a maximum distance from the straight line HD continue to be determined, and then the distances are separately compared with the preset thresholds. The process is repeated until all remaining valid points in the row of point clouds on the plane are covered, and a total quantity of mutation points in the row of point clouds may be obtained through accumulation.

It should be understood that, in the foregoing process, because comparison with a preset threshold needs to be performed each time, when being compared with distances between different straight lines, used thresholds may be different or may be the same.

According to the foregoing method, quantities of mutation points in all rows in the point cloud mesh may be determined, and then the quantities of mutation points in all rows are added to obtain a total quantity of mutation points in the point cloud mesh. Then, a proportion of the total quantity of mutation points in the point cloud mesh to a quantity of valid points included in the point cloud mesh is calculated, to obtain microscopic roughness of the point cloud mesh.

It should be understood that, in this embodiment of this application, in addition to determining the quantity of mutation points in each row in the point cloud mesh in the foregoing manner, the quantity of mutation points in each row in the point cloud mesh may alternatively be determined in another manner or according to another algorithm. This is not limited in this embodiment of this application.

The distribution discontinuity of the point clouds in the point cloud mesh may be the sum of the discontinuities of all the columns of point clouds in the point cloud mesh.

Optionally, the discontinuity of each column of point clouds in the point cloud mesh may be determined based on a quantity of valid points included in each column of point clouds.

For example, if a quantity of valid points in a $j^{th}$ column of point clouds in the point cloud mesh is 0, it is determined that a discontinuity of the $j^{th}$ column of point clouds is a, where j is a positive integer, and a is a positive number.

Alternatively, if a quantity of valid points in a $j^{th}$ column of point clouds in the point cloud mesh is 1, and the $j^{th}$ column is a last column or a first column in the point cloud mesh, it is determined that a discontinuity of the $j^{th}$ column of point clouds is 0, where j is a positive integer.

Alternatively, if a quantity of valid points in a $j^{th}$ column of point clouds in the point cloud mesh is 1, and a quantity of valid points in a $(j+1)^{th}$ column or a $(j-1)^{th}$ column of point clouds in the point cloud mesh is greater than 1, it is determined that a discontinuity of the $j^{th}$ column of point clouds is b, where j is an integer greater than 1, and b is a positive number.

Alternatively, if a quantity of valid points in a $j^{th}$ column of point clouds in the point cloud mesh is greater than 1, it is determined whether row coordinates corresponding to the valid points in the $j^{th}$ column of point clouds are consecutive; and if the row coordinates are consecutive, it is determined that a discontinuity of the $j^{th}$ column of point clouds is 0, or if the row coordinates are not consecutive, it is determined that a discontinuity of the $j^{th}$ column of point clouds is c, where j is an integer greater than 1, and c is a positive number.

Optionally, a is greater than b, and b is greater than c.

The following describes in detail, by using a point cloud mesh shown in FIG. 8 as an example, a specific manner of determining a discontinuity of valid point clouds in each column in the point cloud mesh.

In the point cloud mesh shown in FIG. 8, for a first column of point clouds (whose column coordinates in the point cloud mesh are 11), if a quantity of valid points is 1, and the first column of point clouds in the point cloud mesh is a first column, it is determined that a discontinuity of the first column of point clouds is 0.

For a second column of point clouds (whose column coordinates in the point cloud mesh are 12), if a quantity of valid points is 4, which is greater than 1, it needs to be further determined whether row coordinates (namely, laser beam channel numbers) of the valid point clouds in the second column are consecutive. For the four valid points in the second column of point clouds, the row coordinates of the four valid points are 5, 6, 7, and 8, that is, the laser beam channel numbers are consecutive. In this case, a discontinuity of the second column of point clouds is 0.

For a third column of point clouds (whose column coordinates in the mesh are 13), if a quantity of valid points is 1, the third column is a middle column, and the quantity of valid points in the left adjacent second column is greater than 1, it is determined that a discontinuity of the third column of point clouds is b. That is, the discontinuity of the third column of point clouds is b.

For a fourth column of point clouds (whose column coordinates in the mesh are 14), if a quantity of valid points is 0, it is determined that a discontinuity of the fourth column of point clouds is a.

For a fifth column of point clouds (whose column coordinates in the mesh are 15), if a quantity of valid points is 3, it needs to be further determined whether row coordinates (namely, laser beam channel numbers) of the valid point clouds in the fifth column are consecutive. For the three valid points in the fifth column of point clouds, the row coordinates of the three valid points are 5, 6, and 8, that is, the laser beam channel numbers are not consecutive. In this case, a discontinuity of the fifth column of point clouds is c.

According to the foregoing method, discontinuities of all columns of point clouds may be determined separately, and then the discontinuities of all the columns are added, to finally obtain a distribution discontinuity of point clouds in the point cloud mesh.

It should be understood that, in this embodiment of this application, in addition to determining the distribution discontinuity of each column of point clouds in the point cloud mesh in the foregoing manner, the distribution discontinuity of each column of point clouds in the point cloud mesh may alternatively be determined in another manner or according to another algorithm. This is not limited in this embodiment of this application.

According to the foregoing method, the distribution discontinuity of the point clouds in the point cloud mesh and the microscopic roughness of the point cloud mesh can be determined, to determine whether the target point cloud is a false target point cloud. The method is simple and convenient to implement. In addition, only the geometric feature of the point cloud mesh is used, and an intensity feature of a reflected signal of the lidar is not used, so that the method can be applied to and compatible with different models and brands of lidars. The point cloud mesh is obtained by using the single lidar and a single frame of point cloud, so that the calculation delay can be reduced. In addition, a false detection/missing detection rate of false targets in the point cloud is reduced. The false target caused by the splashing water due to road surface waterlogging, or by the road dust, the vehicle exhaust, or the like can be accurately detected, so that a false target detection rate is improved.

It should be understood that the foregoing descriptions are merely intended to help a person skilled in the art better understand the embodiments of this application, but are not intended to limit the scope of the embodiments of this application. It is clear that a person skilled in the art may make various equivalent modifications or changes based on the foregoing examples. For example, some steps in the embodiments of the method 200 described above may be unnecessary or some steps may be newly added, or any two or more of the foregoing embodiments may be combined. Such a modified, changed, or combined solution also falls within the scope of the embodiments of this application.

It should be further understood that, the foregoing descriptions of the embodiments of this application focus on a difference between the embodiments. For same or similar parts that are not mentioned, refer to each other. For brevity, details are not described herein again.

It should be further understood that sequence numbers of the foregoing processes do not mean execution sequences. The execution sequences of the processes should be determined based on functions and internal logic of the processes, and should not constitute any limitation on implementation processes of the embodiments of this application.

It should be further understood that in the embodiments of this application, "presetting" and "predefinition" may be implemented by pre-storing, in a device (including, for example, a terminal and a network device), corresponding code, a corresponding table, or another manner that can be used to indicate related information. A specific implementation is not limited in this application.

It should be understood that division of manners, cases, types, and embodiments in the embodiments of this application are merely for ease of description, but should not constitute any special limitation, and features in various manners, types, cases, and embodiments may be combined when there is no contradiction.

It should be further understood that in the embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

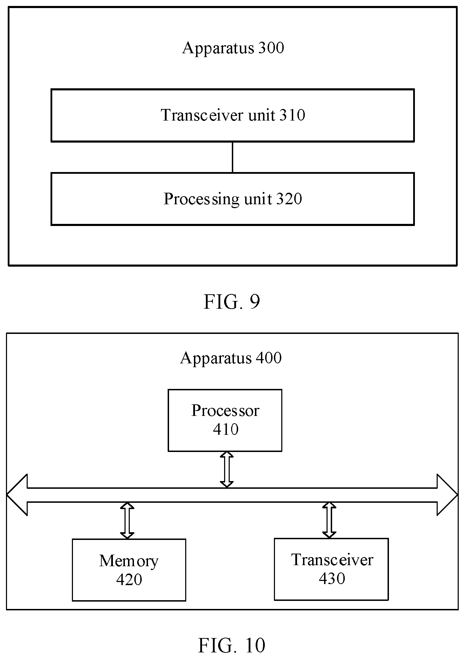

The foregoing describes in detail the target recognition method in the embodiments of this application with reference to FIG. 1 to FIG. 8. The following describes in detail a target recognition apparatus in the embodiments of this application with reference to FIG. 9 and FIG. 10.

FIG. 9 is a schematic block diagram of a target recognition apparatus 300 according to an embodiment of this application. The apparatus 300 may correspond to the lidar described in the foregoing method 200, or may be a chip, a component, or an integrated circuit in the lidar, or a chip in an in-vehicle processor or the like. In addition, modules or units in the apparatus 300 are separately configured to perform actions or processing processes performed in the method 200.

As shown in FIG. 9, the apparatus 300 includes a transceiver unit 310 and a processing unit 320. The transceiver unit 310 is configured to perform specific signal receiving and transmitting under driving of the processing unit 320.

The transceiver unit 310 is configured to receive a target laser point cloud.

The processing unit 320 is configured to generate a point cloud mesh corresponding to the target laser point cloud, where one point in the target laser point cloud corresponds to one valid point in the point cloud mesh.

The processing unit 320 is further configured to determine or determine, based on a geometric feature of the point cloud mesh, whether the target laser point cloud is a noise point cloud, where the geometric feature of the point cloud mesh includes microscopic roughness of the point cloud mesh and/or a distribution discontinuity of point clouds in the point cloud mesh.

According to the target recognition apparatus provided in the first aspect, a laser point cloud is obtained by performing single frame detection by using a single lidar; the laser point cloud is converted into a mesh; and a geometric feature of the point cloud mesh instead of an intensity feature of a lidar reflection point is used to determine whether the laser point cloud is a false target caused by splashing water due to road surface waterlogging or by road dust, vehicle exhaust, or the like. This can effectively reduce a false detection rate, and improve a false target detection rate. In addition, because single frame detection is performed by using the single lidar, the method can be applied to and compatible with different models and brands of lidars, and is simple and convenient to implement.

Optionally, in some embodiments of this application, the microscopic roughness of the point cloud mesh is a proportion of a total quantity of mutation points in the point cloud mesh to a quantity of valid points included in the point cloud mesh. The total quantity of mutation points in the point cloud mesh is a sum of quantities of mutation points in all rows in the point cloud mesh.

Optionally, in some embodiments of this application, the distribution discontinuity of the point clouds in the point cloud mesh is a sum of discontinuities of all columns of point clouds in the point cloud mesh.

Optionally, in some embodiments of this application, the processing unit 320 is further configured to: when the microscopic roughness of the point cloud mesh is greater than or equal to a first threshold, determine that the target laser point cloud is a noise point cloud; and/or when the distribution discontinuity of the point clouds in the point cloud mesh is greater than or equal to a second threshold, determine that the target laser point cloud is a noise point cloud.

Optionally, in some embodiments of this application, the processing unit 320 is further configured to:

if a quantity of valid points in an $i^{th}$ row of point clouds in the point cloud mesh is less than or equal to 2, determine that a quantity of mutation points in the $i^{th}$ row in the point cloud mesh is 0, where i is a positive integer; or

if a quantity of valid points in an $i^{th}$ row of point clouds in the point cloud mesh is greater than or equal to 3, determine whether a second valid point in three consecutive valid points in the $i^{th}$ row of point clouds is a mutation point, where i is a positive integer, and

determine a quantity of mutation points in the $i^{th}$ row in the point cloud mesh based on whether a second valid point in every three consecutive valid points in the $i^{th}$ row of point clouds is a mutation point.

Optionally, in some embodiments of this application, the processing unit 320 is further configured to:

when the quantity of valid points in the $i^{th}$ row of point clouds in the point cloud mesh is greater than or equal to 3, and the three consecutive valid points in the $i^{th}$ row of point clouds are respectively a first valid point, the second valid point, and a third valid point, if a distance from a connection line between the first valid point and the third valid point to the second valid point is greater than or equal to a preset threshold, determine that the second valid point is a mutation point; or

if a distance from a connection line between the first valid point and the third valid point to the second valid point is less than the preset threshold, determine that the second valid point is not a mutation point.

Optionally, in some embodiments of this application, the processing unit 320 is further configured to:

three consecutive valid points in the $i^{th}$ row of point clouds are respectively a first valid point P, a second valid point Q, and a third valid point S, and O is a coordinate origin;

an included angle between $\overrightarrow{SP}$ and $\overrightarrow{SO}$ is $\beta$, an included angle between $\overrightarrow{OS}$ and $\overrightarrow{OQ}$ is $\theta$, an included angle between $\overrightarrow{OQ}$ and $\overrightarrow{PS}$ is $\alpha$, and $\alpha = 180° - \theta - \beta$;

$$\cos(\beta) = \frac{\overrightarrow{SP} \cdot \overrightarrow{SO}}{\left|\overrightarrow{SP}\right| \cdot \left|\overrightarrow{SO}\right|}, \text{ and } \cos(\theta) = \frac{\overrightarrow{OQ} \cdot \overrightarrow{OS}}{\left|\overrightarrow{OQ}\right| \cdot \left|\overrightarrow{OS}\right|};$$

and

a reference point corresponding to the second valid point is $Q_1$, and $\left|\overrightarrow{OQ_1}\right| = \frac{\left|\overrightarrow{OS}\right|}{\sin(\alpha)} \cdot \sin(\beta)$ .

The processing unit 320 is further configured to: if a difference between lengths of $|\overrightarrow{OQ_1}|$ and $|\overrightarrow{OQ}|$ is greater than or equal to a preset threshold, determine that the second valid point Q is a mutation point; or if a difference between lengths of $|\overrightarrow{OQ_1}|$ and $|\overrightarrow{OQ}|$ is less than the preset threshold, determine that the second valid point Q is not a mutation point.

Optionally, in some embodiments of this application, the processing unit 320 is further configured to:

project a valid point in the $i^{th}$ row of point clouds onto a plane;
determine, based on a first connection line between a first valid point with a maximum azimuth and a second valid point with a minimum azimuth on the plane, a third valid point with a maximum distance from the first connection line; and
if the distance between the third valid point and the first straight line is greater than or equal to a third threshold, determine that the third valid point is a first mutation point; separately determine, from valid points on the plane except the first valid point, the second valid point, and the third valid point, a fourth valid point with a maximum distance from a second connection line between the first valid point and the third valid point and a fifth valid point with a maximum distance from a third connection line between the second valid point and the third valid point, where if the distance between the fourth valid point and the second connection line is greater than or equal to the third threshold, a quantity of mutation points in the $i^{th}$ row of point clouds is increased by one, and if the distance between the fifth valid point and the third connection line is greater than or equal to the third threshold, the quantity of mutation points in the $i^{th}$ row of point clouds is increased by one; and repeat the process until no new straight line is generated on the plane, where a total quantity of mutation points in the $i^{th}$ row of point clouds may be obtained through accumulation.

If the distance between the third valid point and the first straight line is less than the third threshold, a quantity of mutation points in the $i^{th}$ row of point clouds is 0.

Optionally, in some embodiments of this application, the discontinuity of each column of point clouds in the point cloud mesh is determined based on a quantity of valid points included in each column of point clouds.

Optionally, in some embodiments of this application, the processing unit 320 is further configured to:

if a quantity of valid points in a $j^{th}$ column of point clouds in the point cloud mesh is 0, determine that a discontinuity of the $j^{th}$ column of point clouds is a, where j is a positive integer, and a is a positive number; or
if a quantity of valid points in a $j^{th}$ column of point clouds in the point cloud mesh is 1, and the $j^{th}$ column is a last column or a first column in the point cloud mesh, determine that a discontinuity of the $j^{th}$ column of point clouds is 0, where j is a positive integer; or
if a quantity of valid points in a $j^{th}$ column of point clouds in the point cloud mesh is 1, and a quantity of valid points in a $(j+1)^{th}$ column or a $(j-1)^{th}$ column of point clouds in the point cloud mesh is greater than 1, determine that a discontinuity of the $j^{th}$ column of point clouds is b, where j is an integer greater than 1, and b is a positive number; or
if a quantity of valid points in a $j^{th}$ column of point clouds in the point cloud mesh is greater than 1, determine whether row coordinates corresponding to the valid points in the $j^{th}$ column of point clouds are consecutive; and if the row coordinates are consecutive, determine that a discontinuity of the $j^{th}$ column of point clouds is 0, or if the row coordinates are not consecutive, determine that a discontinuity of the $j^{th}$ column of point clouds is c, where j is an integer greater than 1, and c is a positive number.

Optionally, in some embodiments of this application, the target laser point cloud is obtained by performing single frame detection by using the single lidar.

Optionally, in some embodiments of this application, the false target laser point is caused by one or more of the splashing water due to road surface waterlogging, the vehicle exhaust, or the road dust.

It should be understood that for a specific process of performing the foregoing corresponding steps by the modules (units) in the apparatus 300, refer to the foregoing descriptions with reference to the method 200 and related embodiments in FIG. 2 to FIG. 8. For brevity, details are not described herein again.

Optionally, the transceiver unit 310 may include a receiving unit (module) and a sending unit (module), configured to perform the steps of receiving information and sending information in the embodiments of the method 200.

Further, the apparatus 300 may further include a storage unit (module). The transceiver unit 310 may be a transceiver, an input/output interface, or an interface circuit. The storage module is configured to store instructions executed by the transceiver unit 310 and the processing unit 320. The transceiver unit 310, the processing unit 310, and the storage unit are coupled to each other. The storage unit stores the instructions. The processing unit 320 is configured to execute the instructions stored in the storage unit. The transceiver unit 310 is configured to send or receive a specific signal under driving of the processing unit 320.

It should be understood that the transceiver unit 310 may be a transceiver, an input/output interface, or an interface circuit. The storage unit may be a memory. The processing unit 320 may be implemented as a processor. As shown in FIG. 10, a target recognition apparatus 400 may include a processor 410, a memory 420, and a transceiver 430.

The target recognition apparatus 300 shown in FIG. 9 or the target recognition apparatus 400 shown in FIG. 10 can implement the steps performed in the embodiment of the method 200 and the embodiments shown in FIG. 2 to FIG. 8. For similar descriptions, refer to the descriptions in the foregoing corresponding method. To avoid repetition, details are not described herein again.

It should be understood that division of the foregoing apparatus into units is merely division into logical functions. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. Alternatively, each unit may be stored in a memory in a form of a program to be invoked by a processing element of the apparatus to perform a function of the unit. The processing element herein may also be referred to as a processor, and may be an integrated circuit having a signal processing capability. In an implementation process, the steps in the foregoing methods or the foregoing units may be implemented by using a hardware integrated logic circuit in the processing element, or may be implemented in a form of software invoked by the processing element.

For example, a unit in any one of the foregoing apparatuses may be one or more integrated circuits configured to implement the foregoing methods, for example, one or more application-specific integrated circuits (application-specific integrated circuit, ASIC), one or more digital signal processors (digital signal processor, DSP), one or more field programmable gate arrays (field programmable gate array, FPGA), or a combination of at least two of these integrated circuits. For another example, when the unit in the apparatus is implemented by invoking a program by a processing element, the processing element may be a general-purpose processor, for example, a central processing unit (central processing unit, CPU) or another processor that can invoke the program. For another example, the units may be integrated and implemented in a form of a system-on-a-chip (system-on-a-chip, SOC).

It should be understood that, the processor in the embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any other combination thereof. When the software is used to implement the embodiments, all or some of the foregoing embodiments may be implemented in a form of a computer program product. The computer program product includes one or more computer instructions or computer programs. When the computer instructions or the computer programs are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a computer-readable medium, configured to store computer program code. The computer program code includes instructions used to perform the target recognition method in the foregoing method 200 in the embodiments of this application. The readable medium may be a read-only memory (read-only memory, ROM) or a random access memory (random access memory, RAM). This is not limited in this embodiment of this application.

This application further provides a computer program product. The computer program product includes instructions. When the instructions are executed, the target recognition apparatus separately performs operations corresponding to the method 200.

An embodiment of this application further provides a chip system, and the chip system is applied to a lidar. The chip system includes one or more interface circuits and one or more processors. The interface circuit and the processor are interconnected through a line. The processor is configured to perform the target recognition method in the embodiment of this application in the method 200.

An embodiment of this application further provides a chip. The chip includes a processor, configured to invoke a computer program from a memory and run the computer program, so that a device on which the chip is installed is enabled to perform the target recognition method in the method 200.

Optionally, any target recognition apparatus provided in the foregoing embodiments of this application may include the system chip.

Optionally, the computer instructions are stored in a storage unit.

Optionally, the storage unit is a storage unit inside the chip, such as a register or a cache. Alternatively, the storage unit may be a storage unit that is inside a terminal and that is located outside the chip, such as a ROM, another type of static storage device that can store static information and instructions, or a RAM. The processor mentioned in any of the foregoing descriptions may be a CPU, a microprocessor, an ASIC, or one or more integrated circuits used to control program execution of the target recognition method. The processing unit and the storage unit may be decoupled, separately disposed on different physical devices, and connected in a wired or wireless manner to implement functions of the processing unit and the storage unit, to support the system chip in implementing various functions in the foregoing embodiments. Alternatively, the processing unit and the memory may be coupled to a same device.

This application further provides a lidar. The lidar includes any one of the target recognition apparatuses provided in the embodiments of this application. Alternatively, the lidar includes any one of the chip systems or chips provided in this application.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Names may be assigned to various objects that may appear in this application, for example, various messages/information/devices/network elements/systems/apparatuses/actions/operations/procedures/concepts. It may be understood that these specific names do not constitute a limitation on the related objects, and the assigned names may change with a factor such as a scenario, a context, or a use habit. Technical meanings of technical terms in this application should be understood and determined mainly based on functions and technical effects that are of the technical terms and that are reflected/performed in the technical solutions.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: a USB flash drive, a removable hard disk, a read-only memory (read-only memory, ROM), and a random access memory.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A target recognition method, comprising:

    receiving a target laser point cloud, and generating a point cloud mesh corresponding to the target laser point cloud, wherein one point in the target laser point cloud corresponds to one valid point in the point cloud mesh; and
    determining, based on a geometric feature of the point cloud mesh, whether the target laser point cloud is a noise point cloud,
    **characterised in that** the noise point cloud represents a false target like caused by vehicle exhaust, splashing water, or dust on a road surface;
    a false target having a disordered surface, such as a roadside bush, the geometric feature of the point cloud mesh comprises microscopic roughness of the point cloud mesh and/or a distribution discontinuity of point clouds in the point cloud mesh,
    wherein the microscopic roughness of the point cloud mesh is a proportion of a total quantity of mutation points in the point cloud mesh to a quantity of valid points comprised in the point cloud mesh; and
    the total quantity of mutation points in the point cloud mesh is a sum of quantities of mutation points in all rows in the point cloud mesh or a sum of quantities of mutation points in all columns in the point cloud mesh,
    wherein a point in the point cloud mesh is determined to be a mutation point based on a mutation degree or a difference between valid points in the point cloud mesh.

2.  The method according to claims 1, wherein
    the distribution discontinuity of the point clouds in the point cloud mesh is a sum of discontinuities of all columns of point clouds in the point cloud mesh.

3.  The method according to claim 1 or 2, wherein
    the recognizing whether the target laser point cloud is a noise point cloud comprises:

if the microscopic roughness of the point cloud mesh is greater than or equal to a first threshold, determining that the target laser point cloud is a noise point cloud; and/or

if the distribution discontinuity of the point clouds in the point cloud mesh is greater than or equal to a second threshold, determining that the target laser point cloud is a noise point cloud.

4. The method according to any one of claims 1 to 3, wherein the method further comprises:

if a quantity of valid points in an $i^{th}$ row of point clouds in the point cloud mesh is less than or equal to 2, determining that a quantity of mutation points in the $i^{th}$ row in the point cloud mesh is 0, wherein i is a positive integer; or
if a quantity of valid points in an $i^{th}$ row of point clouds in the point cloud mesh is greater than or equal to 3, sequentially selecting three consecutive valid points in the $i^{th}$ row of point clouds to determine whether a second valid point in the three consecutive valid points is a mutation point, wherein i is a positive integer, and determining a quantity of mutation points in the $i^{th}$ row in the point cloud mesh based on whether a second valid point in every three consecutive valid points in the $i^{th}$ row of point clouds is a mutation point.

5. The method according to claim 4, wherein

when the quantity of valid points in the $i^{th}$ row of point clouds in the point cloud mesh is greater than or equal to 3, and the three consecutive valid points in the $i^{th}$ row of point clouds are respectively a first valid point, the second valid point, and a third valid point, if a distance from a connection line between the first valid point and the third valid point to the second valid point is greater than or equal to a preset threshold, determining that the second valid point is a mutation point; or
if a distance from a connection line between the first valid point and the third valid point to the second valid point is less than the preset threshold, determining that the second valid point is not a mutation point.

6. The method according to any one of claims 1 to 3, wherein the method further comprises:

projecting a valid point in the $i^{th}$ row of point clouds onto a plane;
determining, based on a first connection line between a first valid point with a maximum azimuth and a second valid point with a minimum azimuth on the plane, a third valid point with a maximum distance from the first connection line; and
if the distance between the third valid point and the first straight line is greater than or equal to a third threshold, determining that the third valid point is a first mutation point; separately determining, from valid points on the plane except the first valid point, the second valid point, and the third valid point, a fourth valid point with a maximum distance from a second connection line between the first valid point and the third valid point and a fifth valid point with a maximum distance from a third connection line between the second valid point and the third valid point, wherein if the distance between the fourth valid point and the second connection line is greater than or equal to the third threshold, a quantity of mutation points in the $i^{th}$ row of point clouds is increased by one, and if the distance between the fifth valid point and the third connection line is greater than or equal to the third threshold, the quantity of mutation points in the $i^{th}$ row of point clouds is increased by one; and repeating the process until no new straight line is generated on the plane, wherein the quantity of mutation points in the $i^{th}$ row of point clouds is obtained through accumulation, wherein
if the distance between the third valid point and the first straight line is less than the third threshold, a quantity of mutation points in the $i^{th}$ row of point clouds is 0.

7. The method according to claim 2, wherein the discontinuity of each column of point clouds in the point cloud mesh is determined based on a quantity of valid points comprised in each column of point clouds.

8. The method according to claim 7, wherein the method further comprises:

if a quantity of valid points in a $j^{th}$ column of point clouds in the point cloud mesh is 0, determining that a discontinuity of the $j^{th}$ column of point clouds is a, wherein j is a positive integer, and a is a positive number; or
if a quantity of valid points in a $j^{th}$ column of point clouds in the point cloud mesh is 1, and the $j^{th}$ column is a last column or a first column in the point cloud mesh, determining that a discontinuity of the $j^{th}$ column of point clouds is 0, wherein j is a positive integer; or
if a quantity of valid points in a $j^{th}$ column of point clouds in the point cloud mesh is 1, and a quantity of valid points in a $(j+1)^{th}$ column or a $(j-1)^{th}$ column of point clouds in the point cloud mesh is greater than 1, determining that a discontinuity of the $j^{th}$ column of point clouds is b, wherein j is an integer greater than 1, and b is a positive number;

or

if a quantity of valid points in a $j^{th}$ column of point clouds in the point cloud mesh is greater than 1, determining whether row coordinates corresponding to the valid points in the $j^{th}$ column of point clouds are consecutive; and if the row coordinates are consecutive, determining that a discontinuity of the $j^{th}$ column of point clouds is 0, or if the row coordinates are not consecutive, determining that a discontinuity of the $j^{th}$ column of point clouds is c, wherein j is an integer greater than 1, and c is a positive number.

9. The method according to any one of claims 1 to 7, wherein
the target laser point cloud is obtained by performing single frame detection by using a single lidar.

10. A target recognition apparatus, wherein the apparatus comprises at least one processor, and the at least one processor is coupled to at least one memory; and
the at least one processor is configured to execute a computer program or instructions stored in the at least one memory, so that the apparatus is enabled to perform the target recognition method according to any one of claims 1 to 9.

11. A lidar, comprising a target recognition apparatus according to claim 10.

12. A chip system, wherein the chip system is applied to a lidar; the chip system comprises one or more interface circuits and one or more processors; the interface circuit and the processor are interconnected through a line; and the processor is configured to perform the target recognition method according to any one of claims 1 to 9.

13. A computer-readable storage medium, wherein the computer-readable storage medium stores a computer program or instructions; and when a computer reads and executes the computer program or the instructions, the computer is enabled to perform the target recognition method according to any one of claims 1 to 9.


**Patentansprüche**

1. Verfahren zur Erkennung eines Ziels, umfassend:

Empfangen einer Ziellaserpunktwolke und Erzeugen eines Punktwolkennetzes, das der Ziellaserpunktwolke entspricht, wobei ein Punkt in der Ziellaserpunktwolke einem gültigen Punkt in dem Punktwolkennetz entspricht; und
Bestimmen, basierend auf einem geometrischen Merkmal des Punktwolkennetzes, ob es sich bei der Ziellaserpunktwolke um eine Rauschpunktwolke handelt,
**dadurch gekennzeichnet, dass** die Rauschpunktwolke ein falsches Ziel darstellt, wie etwa verursacht durch Fahrzeugabgase, Spritzwasser oder Staub auf einer Straßenoberfläche; ein falsches Ziel, das eine ungeordnete Oberfläche aufweist, wie etwa ein Busch am Straßenrand, wobei das geometrische Merkmal des Punktwolkennetzes eine mikroskopische Rauheit des Punktwolkennetzes und/oder eine Verteilungsdiskontinuität von Punktwolken in dem Punktwolkennetz umfasst,
wobei die mikroskopische Rauheit des Punktwolkennetzes ein Verhältnis einer Gesamtmenge von Mutationspunkten in dem Punktwolkennetz zu einer Menge gültiger Punkte ist, die in dem Punktwolkennetz umfasst sind; und
die Gesamtmenge von Mutationspunkten in dem Punktwolkennetz eine Summe der Mengen von Mutationspunkten in allen Zeilen des Punktwolkennetzes oder eine Summe von Mengen von Mutationspunkten in allen Spalten des Punktwolkennetzes ist,
wobei ein Punkt in dem Punktwolkennetz als Mutationspunkt auf der Grundlage eines Mutationsgrades oder einer Differenz zwischen gültigen Punkten in dem Punktwolkennetz bestimmt wird.

2. Verfahren nach Anspruch 1, wobei
die Verteilungsdiskontinuität der Punktwolken in dem Punktwolkennetz eine Summe von Diskontinuitäten aller Spalten von Punktwolken in dem Punktwolkennetz ist.

3. Verfahren nach Anspruch 1 oder 2, wobei
das Erkennen, ob die Ziellaserpunktwolke eine Rauschpunktwolke ist, Folgendes umfasst:

wenn die mikroskopische Rauheit des Punktwolkennetzes größer als oder gleich einem ersten Schwellenwert ist, Bestimmen, dass die Ziellaserpunktwolke eine Rauschpunktwolke ist; und/oder

wenn die Verteilungsdiskontinuität der Punktwolken in dem Punktwolkennetz größer als oder gleich einem zweiten Schwellenwert ist, Bestimmen, dass die Ziellaserpunktwolke eine Rauschpunktwolke ist.

4. Verfahren nach einem der Ansprüche 1 bis 3, wobei das Verfahren ferner Folgendes umfasst:

wenn eine Menge gültiger Punkte in einer i-ten Reihe von Punktwolken in dem Punktwolkennetz kleiner als oder gleich 2 ist, Bestimmen, dass eine Menge von Mutationspunkten in der i-ten Reihe in dem Punktwolkennetz 0 ist, wobei i eine positive ganze Zahl ist; oder

wenn eine Menge gültiger Punkte in einer i-ten Reihe von Punktwolken in dem Punktwolkennetz größer als oder gleich 3 ist, sequenzielles Auswählen von drei aufeinanderfolgenden gültigen Punkten in der i-ten Reihe von Punktwolken, um zu bestimmen, ob ein zweiter gültiger Punkt in den drei aufeinanderfolgenden gültigen Punkten ein Mutationspunkt ist, wobei i eine positive ganze Zahl ist, und

Bestimmen einer Menge von Mutationspunkten in der i-ten Reihe in dem Punktwolkennetz basierend darauf, ob ein zweiter gültiger Punkt in jeweils drei aufeinanderfolgenden gültigen Punkten in der i-ten Reihe von Punktwolken ein Mutationspunkt ist.

5. Verfahren nach Anspruch 4, wobei

wenn die Menge von gültigen Punkten in der i-ten Reihe von Punktwolken in dem Punktwolkennetz größer als oder gleich 3 ist und die drei aufeinanderfolgenden gültigen Punkte in der i-ten Reihe von Punktwolken jeweils ein erster gültiger Punkt, der zweite gültige Punkt und ein dritter gültiger Punkt sind, wenn ein Abstand von einer Verbindungslinie zwischen dem ersten gültigen Punkt und dem dritten gültigen Punkt zu dem zweiten gültigen Punkt größer als oder gleich einem voreingestellten Schwellenwert ist, Bestimmen, dass der zweite gültige Punkt ein Mutationspunkt ist; oder

wenn ein Abstand von einer Verbindungslinie zwischen dem ersten gültigen Punkt und dem dritten gültigen Punkt zu dem zweiten gültigen Punkt kleiner als der voreingestellte Schwellenwert ist, Bestimmen, dass der zweite gültige Punkt kein Mutationspunkt ist.

6. Verfahren nach einem der Ansprüche 1 bis 3, wobei das Verfahren ferner Folgendes umfasst:

Projizieren eines gültigen Punktes in der i-ten Reihe von Punktwolken auf eine Ebene;

Bestimmen, basierend auf einer ersten Verbindungslinie zwischen einem ersten gültigen Punkt mit einem maximalen Azimut und einem zweiten gültigen Punkt mit einem minimalen Azimut auf der Ebene, eines dritten gültigen Punktes mit einem maximalen Abstand von der ersten Verbindungslinie; und

wenn der Abstand zwischen dem dritten gültigen Punkt und der ersten geraden Linie größer als oder gleich einem dritten Schwellenwert ist, Bestimmen, dass der dritte gültige Punkt ein erster Mutationspunkt ist; separates Bestimmen, von gültigen Punkten auf der Ebene mit Ausnahme des ersten gültigen Punktes, des zweiten gültigen Punktes und des dritten gültigen Punktes, eines vierten gültigen Punktes mit einem maximalen Abstand von einer zweiten Verbindungslinie zwischen dem ersten gültigen Punkt und dem dritten gültigen Punkt und eines fünften gültigen Punktes mit einem maximalen Abstand von einer dritten Verbindungslinie zwischen dem zweiten gültigen Punkt und dem dritten gültigen Punkt, wobei, wenn der Abstand zwischen dem vierten gültigen Punkt und der zweiten Verbindungslinie größer als oder gleich dem dritten Schwellenwert ist, eine Menge von Mutationspunkten in der i-ten Reihe von Punktwolken um eins erhöht wird und, wenn der Abstand zwischen dem fünften gültigen Punkt und der dritten Verbindungslinie größer als oder gleich dem dritten Schwellenwert ist, die Menge von Mutationspunkten in der i-ten Reihe von Punktwolken um eins erhöht wird; und Wiederholen des Prozesses, bis keine neue gerade Linie auf der Ebene erzeugt wird, wobei die Menge von Mutationspunkten in der i-ten Reihe von Punktwolken durch Akkumulation erhalten wird, wobei

wenn der Abstand zwischen dem dritten gültigen Punkt und der ersten geraden Linie kleiner als der dritte Schwellenwert ist, eine Menge von Mutationspunkten in der i-ten Zeile der Punktwolken 0 ist.

7. Verfahren nach Anspruch 2, wobei die Diskontinuität jeder Spalte von Punktwolken in dem Punktwolkennetz basierend auf einer Menge gültiger Punkte bestimmt wird, die in jeder Spalte von Punktwolken umfasst sind.

8. Verfahren nach Anspruch 7, wobei das Verfahren ferner Folgendes umfasst:

wenn eine Menge gültiger Punkte in einer j-ten Spalte von Punktwolken in dem Punktwolkennetz 0 ist, Bestimmen, dass eine Diskontinuität der j-ten Spalte von Punktwolken a ist, wobei j eine positive ganze Zahl ist und a eine positive Zahl ist; oder

wenn eine Menge gültiger Punkte in einer j-ten Spalte von Punktwolken in dem Punktwolkennetz 1 ist und die j-te Spalte eine letzte Spalte oder eine erste Spalte in dem Punktwolkennetz ist, Bestimmen, dass eine Diskontinuität der j-ten Spalte von Punktwolken 0 ist, wobei j eine positive ganze Zahl ist; oder

wenn eine Menge gültiger Punkte in einer j-ten Spalte von Punktwolken in dem Punktwolkennetz 1 ist und eine Menge gültiger Punkte in einer (j+1)-ten Spalte oder einer (j-1)-ten Spalte von Punktwolken in dem Punktwolkennetz größer als 1 ist, Bestimmen, dass eine Diskontinuität der j-ten Spalte von Punktwolken b ist, wobei j eine ganze Zahl größer als 1 ist und b eine positive Zahl ist; oder

wenn eine Menge gültiger Punkte in einer j-ten Spalte von Punktwolken in dem Punktwolkennetz größer als 1 ist, Bestimmen, ob Zeilenkoordinaten, die den gültigen Punkten in der j-ten Spalte von Punktwolken entsprechen, aufeinanderfolgend sind; und, wenn die Zeilenkoordinaten aufeinanderfolgend sind, Bestimmen, dass eine Diskontinuität der j-ten Spalte von Punktwolken 0 ist, oder, wenn die Zeilenkoordinaten nicht aufeinanderfolgend sind, Bestimmen, dass eine Diskontinuität der j-ten Spalte von Punktwolken c ist, wobei j eine ganze Zahl größer als 1 ist und c eine positive Zahl ist.

9. Verfahren nach einem der Ansprüche 1 bis 7, wobei
die Ziellaserpunktwolke durch Durchführen einer Einzelbilddetektion unter Verwendung eines einzelnen Lidars erhalten wird.

10. Einrichtung zur Erkennung eines Ziels, wobei die Einrichtung mindestens einen Prozessor umfasst und der mindestens eine Prozessor mit mindestens einem Speicher gekoppelt ist; und
der mindestens Prozessor dazu konfiguriert ist, ein Computerprogramm oder Anweisungen, das/die in dem mindestens einen Speicher gespeichert sind, auszuführen, sodass es der Einrichtung ermöglicht wird, das Verfahren zur Erkennung eines Ziels nach einem der Ansprüche 1 bis 9 durchzuführen.

11. Lidar, umfassend eine Einrichtung zur Erkennung eines Ziels nach Anspruch 10.

12. Chipsystem, wobei das Chipsystem auf ein Lidar angewendet wird; das Chipsystem eine oder mehrere Schnittstellenschaltungen und einen oder mehrere Prozessoren umfasst; die Schnittstellenschaltung und der Prozessor durch eine Leitung miteinander verbunden sind; und der Prozessor dazu konfiguriert ist, das Verfahren zur Erkennung eines Ziels nach einem der Ansprüche 1 bis 9 durchzuführen.

13. Computerlesbares Speichermedium, wobei das computerlesbare Speichermedium ein Computerprogramm oder Anweisungen speichert; und, wenn ein Computer das Computerprogramm oder die Anweisungen liest und ausführt, der Computer dazu befähigt wird, das Verfahren zur Erkennung eines Ziels nach einem der Ansprüche 1 bis 9 durchzuführen.

**Revendications**

1. Procédé de reconnaissance de cible, comprenant :

la réception d'un nuage de points laser cible, et la génération d'un maillage de nuage de points correspondant au nuage de points laser cible, dans lequel un point dans le nuage de points laser cible correspond à un point valide dans le maillage de nuage de points ; et
le fait de déterminer, sur la base d'une caractéristique géométrique du maillage de nuage de points, si le nuage de points laser cible est un nuage de points de bruit,
**caractérisé en ce que** le nuage de points de bruit représente une fausse cible, comme celle causée par les gaz d'échappement d'un véhicule, les éclaboussures d'eau, ou la poussière sur une surface de route ; une fausse cible ayant une surface désordonnée, telle qu'un buisson en bord de route, la caractéristique géométrique du maillage de nuage de points comprend une rugosité microscopique du maillage de nuage de points et/ou une discontinuité de distribution de nuages de points dans le maillage de nuage de points,
dans lequel la rugosité microscopique du maillage de nuage de points est une proportion entre une quantité totale de points de mutation dans le maillage de nuage de points et une quantité de points valides compris dans le maillage de nuage de points ; et
la quantité totale de points de mutation dans le maillage de nuage de points est une somme de quantités de points de mutation dans toutes les lignes dans le maillage de nuage de points ou une somme de quantités de points de mutation dans toutes les colonnes dans le maillage de nuage de points,

dans lequel un point dans le maillage de nuage de points est déterminé comme étant un point de mutation sur la base d'un degré de mutation ou d'une différence entre les points valides dans le maillage de nuage de points.

2. Procédé selon la revendication 1, dans lequel la discontinuité de distribution des nuages de points dans le maillage de nuage de points est une somme de discontinuités de toutes les colonnes de nuages de points dans le maillage de nuage de points.

3. Procédé selon la revendication 1 ou 2, dans lequel le fait de reconnaître si le nuage de points laser cible est un nuage de points de bruit comprend :

si la rugosité microscopique du maillage de nuage de points est supérieure ou égale à un premier seuil, la détermination que le nuage de points laser cible est un nuage de points de bruit ; et/ou
si la discontinuité de distribution des nuages de points dans le maillage de nuage de points est supérieure ou égale à un deuxième seuil, la détermination que le nuage de points laser cible est un nuage de points de bruit.

4. Procédé selon l'une quelconque des revendications 1 à 3, dans lequel le procédé comprend également :

si une quantité de points valides dans une $i^{ème}$ ligne de nuages de points dans le maillage de nuage de points est inférieure ou égale à 2, la détermination qu'une quantité de points de mutation dans la $i^{ème}$ ligne dans le maillage de nuage de points est de 0, dans lequel i est un entier positif ; ou
si une quantité de points valides dans une $i^{ème}$ ligne de nuages de points dans le maillage de nuage de points est supérieure ou égale à 3, la sélection séquentielle de trois points valides consécutifs dans la $i^{ème}$ ligne de nuages de points pour déterminer si un deuxième point valide dans les trois points valides consécutifs est un point de mutation, dans lequel i est un entier positif, et
la détermination d'une quantité de points de mutation dans la $i^{ème}$ ligne dans le maillage de nuage de points selon si un deuxième point valide dans chaque trois points valides consécutifs de la $i^{ème}$ ligne de nuages de points est un point de mutation.

5. Procédé selon la revendication 4, dans lequel

lorsque la quantité de points valides dans la $i^{ème}$ ligne de nuages de points dans le maillage de nuage de points est supérieure ou égale à 3, et que les trois points valides consécutifs dans la $i^{ème}$ ligne de nuages de points sont respectivement un premier point valide, le deuxième point valide, et un troisième point valide, si une distance allant d'une ligne de connexion entre le premier point valide et le troisième point valide jusqu'au deuxième point valide est supérieure ou égale à un seuil prédéfini, la détermination que le deuxième point valide est un point de mutation ; ou
si une distance allant d'une ligne de connexion entre le premier point valide et le troisième point valide jusqu'au deuxième point valide est inférieure au seuil prédéfini, la détermination que le deuxième point valide n'est pas un point de mutation.

6. Procédé selon l'une quelconque des revendications 1 à 3, dans lequel le procédé comprend également :

la projection d'un point valide dans la $i^{ème}$ ligne de nuages de points sur un plan ;
la détermination, sur la base d'une première ligne de connexion entre un premier point valide d'azimut maximal et un deuxième point valide d'azimut minimal sur le plan, d'un troisième point valide à distance maximale de la première ligne de connexion ; et
si la distance entre le troisième point valide et la première ligne droite est supérieure ou égale à un troisième seuil, la détermination que le troisième point valide est un premier point de mutation ; la détermination séparée, à partir de points valides sur le plan à l'exception du premier point valide, du deuxième point valide, et du troisième point valide, d'un quatrième point valide à une distance maximale d'une deuxième ligne de connexion entre le premier point valide et le troisième point valide et d'un cinquième point valide à une distance maximale d'une troisième ligne de connexion entre le deuxième point valide et le troisième point valide, dans lequel si la distance entre le quatrième point valide et la deuxième ligne de connexion est supérieure ou égale au troisième seuil, une quantité de points de mutation dans la $i^{ème}$ ligne de nuages de points est incrémentée de un, et si la distance entre le cinquième point valide et la troisième ligne de connexion est supérieure ou égale au troisième seuil, la quantité de points de mutation dans la $i^{ème}$ ligne de nuages de points est incrémentée de un ; et la répétition du processus jusqu'à ce qu'aucune nouvelle ligne droite ne soit générée sur le plan, dans lequel la quantité de points de mutation dans la $i^{ème}$ ligne de nuages de points est obtenue par accumulation, dans lequel si la distance entre le troisième point valide et la première ligne droite est inférieure au troisième seuil, une quantité de points de mutation dans la i$^{\text{-ème}}$ ligne de nuages de points est de 0.

7. Procédé selon la revendication 2, dans lequel la discontinuité de chaque colonne de nuages de points dans le maillage de nuage de points est déterminée sur la base d'une quantité de points valides compris dans chaque colonne de nuages de points.

8. Procédé selon la revendication 7, dans lequel le procédé comprend également :

si une quantité de points valides dans une j$^{\text{-ème}}$ colonne de nuages de points dans le maillage de nuage de points est de 0, la détermination qu'une discontinuité de la j$^{\text{-ème}}$ colonne de nuages de points est de a, dans lequel j est un entier positif, et a est un nombre positif ; ou
si une quantité de points valides dans une j$^{\text{-ème}}$ colonne de nuages de points dans le maillage de nuage de points est de 1, et que la j$^{\text{-ème}}$ colonne est une dernière colonne ou une première colonne dans le maillage de nuage de points, la détermination qu'une discontinuité de la j$^{\text{-ème}}$ colonne de nuages de points est de 0, dans lequel j est un entier positif ; ou
si une quantité de points valides dans une j$^{\text{-ème}}$ colonne de nuages de points dans le maillage de nuage de points est égal à 1, et si une quantité de points valides dans une (j+1)$^{\text{-ème}}$ colonne ou une (j-1)$^{\text{-ème}}$ colonne de nuages de points dans le maillage de nuage de points est supérieure à 1, la détermination qu'une discontinuité de la j$^{\text{-ème}}$ colonne de nuages de points est de b, dans lequel j est un entier supérieur à 1, et b est un nombre positif ; ou
si une quantité de points valides dans une j$^{\text{-ème}}$ colonne de nuages de points dans le maillage de nuage de points est supérieure à 1, le fait de déterminer si les coordonnées de ligne correspondant aux points valides dans la j$^{\text{-ème}}$ colonne de nuages de points sont consécutives ; et si les coordonnées de ligne sont consécutives, la détermination qu'une discontinuité de la j$^{\text{-ème}}$ colonne de nuages de points est de 0, ou si les coordonnées de ligne ne sont pas consécutives, la détermination qu'une discontinuité de la j$^{\text{-ème}}$ colonne de nuages de points est de c, dans lequel j est un entier supérieur à 1 et c est un nombre positif.

9. Procédé selon l'une quelconque des revendications 1 à 7, dans lequel
le nuage de points laser cible est obtenu en réalisant une détection de trame unique à l'aide d'un seul lidar.

10. Appareil de reconnaissance de cible, dans lequel l'appareil comprend au moins un processeur, et l'au moins un processeur est couplé à au moins une mémoire ; et
l'au moins un processeur est configuré pour exécuter un programme informatique ou des instructions stockés dans l'au moins une mémoire, de sorte que l'appareil est activé pour réaliser le procédé de reconnaissance de cible selon l'une quelconque des revendications 1 à 9.

11. Lidar, comprenant un appareil de reconnaissance de cible selon la revendication 10.

12. Système de puce, dans lequel le système de puce est appliqué à un lidar ; le système de puce comprend un ou plusieurs circuits d'interface et un ou plusieurs processeurs ; le circuit d'interface et le processeur sont interconnectés par une ligne ; et le processeur est configuré pour réaliser le procédé de reconnaissance de cible selon l'une quelconque des revendications 1 à 9.

13. Support de stockage lisible par ordinateur, dans lequel le support de stockage lisible par ordinateur stocke un programme informatique ou des instructions ; et lorsqu'un ordinateur lit et exécute le programme informatique ou les instructions, l'ordinateur est activé pour réaliser le procédé de reconnaissance de cible selon l'une quelconque des revendications 1 à 9.

```
┌──────────┐     ┌──────────┐     ┌──────────┐     ┌──────────┐     ┌──────────┐
│ Original │     │  Ground  │     │Clustering│     │False target│   │  Target  │
│laser point│ ──▶ │extraction│ ──▶ │processing│ ──▶ │ filtering  │──▶│ tracking │
│  cloud   │     │          │     │          │     │            │   │          │
└──────────┘     └──────────┘     └──────────┘     └──────────┘     └──────────┘
```

FIG. 1

```
┌────────────────────────────────────────────┐
│ Receive a target laser point cloud, and     │          S210
│ generate a point cloud mesh corresponding   │ ──────/
│ to the target laser point cloud, where one  │
│ point in the target laser point cloud       │
│ corresponds to one valid point in the point │
│ cloud mesh                                   │
└────────────────────────────────────────────┘
                     │
                     │
┌────────────────────────────────────────────┐
│ Determine, based on a geometric feature of  │
│ the point cloud mesh, whether the target    │          S220
│ laser point cloud is a noise point cloud,   │ ──────/
│ where the geometric feature of the point    │
│ cloud mesh includes microscopic roughness of│
│ the point cloud mesh and/or a distribution  │
│ discontinuity of point clouds in the point  │
│ cloud mesh                                   │
└────────────────────────────────────────────┘
```

FIG. 2

Z

Quantity of beams −1

1

0

Lidar

FIG. 3

a

b

O Invalid point ⊗ Valid point ● Valid point

FIG. 4

FIG. 5

FIG. 6

FIG. 7

FIG. 8

○ Invalid point   ◎ Valid point

Apparatus 300

Transceiver unit 310

Processing unit 320

FIG. 9

Apparatus 400

Processor
410

Memory
420

Transceiver
430

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. HEINZLER**. *CNN-based Lidar Point Cloud De-Noising in Adverse Weather*